# EUROPEAN PATENT APPLICATION

(11) **EP 4 753 123 A1**
(43) Date of publication of application: **03.06.2026**
(21) Application number: 25211686.8
(22) Date of filing: 28.10.2025
(51) Int. Cl.: H02K 11/21, H02K 11/40, H02K 5/10

(54) **MOTOR**

(30) Priority: 29.11.2024 KR 20240174840
(71) Applicant: Hyundai Motor Company, Seoul 06797 (KR); Kia Corporation, Seoul 06797 (KR); Yura Tech Co., Ltd., Sejong-si 30012 (KR)
(72) Inventor: JO, Hyeok Jun, 18280 Hwaseong-si, Gyeonggi-do (KR); CHO, Hyoung Jun, 18280 Hwaseong-si, Gyeonggi-do (KR); YU, Jae Min, 18280 Hwaseong-si, Gyeonggi-do (KR); CHOI, Byoung Hoon, 18280 Hwaseong-si, Gyeonggi-do (KR); HAN, Dong Yeon, 18280 Hwaseong-si, Gyeonggi-do (KR); JUNG, Jae Moon, 31531 Asan-si, Chungcheongnam-do (KR); MOON, Sung Bok, 31526 Asan-si, Chungcheongnam-do (KR); JANG, Jin Seok, 30032 Jochiwon-eup, Sejong-si (KR); PARK, Ji Hoon, 31207 Cheonan-si, Chungcheongnam-do (KR); HA, Dong Woog, 30130 Sejong-si (KR); SHIN, Gang In, 30153 Sejong-si (KR)
(74) Representative: Viering, Jentschura & Partner mbB Patent- und Rechtsanwälte

(57) **Abstract**

A motor may include a shaft grounding ring (SGR), a position sensor including a stator portion and a rotor portion, and a cover in which the stator portion and the SGR are mounted. A vehicle can include such motor. A method of assembling a motor can include attaching a rotor portion of a position sensor to a shaft of the motor, attaching a stator portion of the position sensor to a cover, attaching a C-shaped SGR to the cover, and attaching the cover to the motor, such that the rotor portion is adjacent the stator portion, and such that the SGR and the stator portion of the position sensor are on a same plane that intersects a rotational axis of the shaft.

## Description

### CROSS-REFERENCE TO RELATED APPLICATION

This application claims, under 35 U.S.C. §119(a), the benefit of and priority to Korean Patent Application No. 10-2024-0174840, filed on November 29, 2024, the entire contents of which are incorporated herein by reference.

### TECHNICAL FIELD

The present disclosure relates to a motor, and more particularly, to the structure of a motor.

### BACKGROUND

Recently, eco-friendly vehicles, such as electric vehicles and hybrid vehicles powered by motors, have emerged. The motors may include a shaft grounding ring (SGR) configured to discharge shaft voltage generated in a rotor of the motor to the outside through a brush. Moreover, the motor may include a position sensor capable of detecting the position of the motor in order to control the motor.

So as to avoid mutual signal interference between the SGR and the position sensor, the SGR and the position sensor are required to have a predetermined distance from each other within the motor, which causes an increase in axial length of the motor.

Moreover, the position sensor makes it difficult to simplify the structure of the motor. For example, the position sensor may be connected via a wire to transmit a position signal to a motor driver. However, because the motor requires water-tightness, an intermediate connector is inserted into a motor cover of the motor for the connection, and an external connector connected to the intermediate connector is needed. In other words, in order to satisfy both signal transmission and water-tightness of the motor, the assembly process or structure of the motor tends to become complicated.

The above information disclosed in this Background section is only for enhancement of understanding of the background of the present disclosure, and therefore it may contain information that does not form the related art that is already publicly known, available, or in use.

### SUMMARY

An embodiment of the present disclosure can solve the above-described problems associated with the related art, and an embodiment of the present disclosure can be directed to providing a motor that includes a structure in which there is no interference between a position sensor and a shaft grounding ring (SGR).

An embodiment of the present disclosure can be directed to providing a motor in which there is no need for an increase in axial length of the motor, which was previously required due to the SGR and the position sensor.

An embodiment of the present disclosure can be directed to providing a motor that is capable of transmitting a signal from a position sensor while maintaining the watertight structure of the motor.

The advantages of an embodiment of the present disclosure are not necessarily limited to the foregoing, and other advantages not mentioned herein can be clearly understood by one having ordinary skill in the art to which the present disclosure pertains based on the description below.

According to an embodiment of the present disclosure, a motor can include: a shaft grounding ring (SGR); a position sensor including a stator portion and a rotor portion; and a cover in which the stator portion and the SGR are mounted.

According to an embodiment of the present disclosure, a vehicle can include such motor.

It can be understood that the terms "vehicle" or "vehicular" or other similar terms as used herein can be inclusive of motor vehicles in general, such as passenger automobiles including sport utility vehicles (SUVs), buses, trucks, various commercial vehicles, tractors, watercraft including a variety of boats and ships, aircraft, and the like, and include hybrid vehicles, electric vehicles, plug-in hybrid electric vehicles, hydrogen-powered vehicles, and other alternative fuel vehicles (e.g., fuels derived from resources other than petroleum), for example. As referred to herein, a hybrid vehicle can be a vehicle that has two or more sources of power, for example, a vehicle powered by both gasoline and electricity.

### BRIEF DESCRIPTION OF THE DRAWINGS

The above and other features of example embodiments of the present disclosure will now be described in detail with reference to and illustrated in the accompanying drawings, which are given herein below by way of illustration, and thus are not necessarily limitative for the present disclosure, and wherein:
FIG. 1 is an exploded perspective view of a portion of a motor including a position sensor according to an embodiment of the present disclosure;
FIG. 2 is a cross-sectional view of a portion of a motor including a position sensor according to an embodiment of the present disclosure;
FIG. 3A illustrates a rotor portion of a position sensor according to an embodiment of the present disclosure;
FIG. 3B is a front view of a rotor portion of a position sensor according to an embodiment of the present disclosure;
FIG. 4A illustrates one side of a stator portion of a position sensor according to an embodiment of the present disclosure;
FIG. 4B is a side view of a stator portion of a position sensor according to an embodiment of the present disclosure;
FIG. 5 illustrates a position sensor seal of a position sensor according to an embodiment of the present disclosure;
FIG. 6 illustrates another side of a stator portion of a position sensor according to an embodiment of the present disclosure;
FIG. 7 illustrates a state in which a position sensor according to an embodiment of the present disclosure is coupled to a cover of a motor;
FIG. 8 is one side surface view of a cover of a motor for a position sensor according to an embodiment of the present disclosure;
FIG. 9 is another side surface view of a cover of a motor for a position sensor according to an embodiment of the present disclosure;
FIG. 10 illustrates a motor seal configured to be disposed between a motor cover and a motor housing for a position sensor according to an embodiment of the present disclosure;
FIG. 11 illustrates a shaft grounding ring (SGR) according to an embodiment of the present disclosure; and
FIG. 12 is a cross-sectional view of a portion of a motor including a position sensor according to an embodiment of the present disclosure.

It can be understood that the appended drawings are not necessarily drawn to scale, and can be presenting a somewhat simplified representation of various features illustrative of some basic principles of example embodiments of the present disclosure. The specific design features of an embodiment of the present disclosure, including, for example, specific dimensions, orientations, locations, and shapes, can be determined in part by a particular intended application and usage environment.

In the figures, reference numerals can refer to same or equivalent parts of example embodiments of the present disclosure throughout the several figures of the drawings.

### DETAILED DESCRIPTION OF ILLUSTRATIVE EMBODIMENTS

Descriptions of specific structures or functions presented in the example embodiments of the present disclosure are merely examples for the purpose of explaining concepts of the present disclosure, and an embodiment of the present disclosure may be implemented in various forms. The descriptions should not be construed as being necessarily limited to the example embodiments described herein, and can be understood to include modifications, equivalents, and substitutes falling within the ideas and scopes of the present disclosure.

In the present disclosure, terms such as "first" and/or "second" may be used to describe various components, but the components are not necessarily limited by such terms. Such terms can be used merely to distinguish one component from another. For example, a first component could be termed a second component, and similarly, a second component could be termed a first component, without departing from the scopes of embodiments of the present disclosure.

It can be understood that, when a component is referred to as being "connected to" or "coupled to" another component, the component may be directly connected to or coupled to the other component, or intervening components may also be present. In contrast, when a component is referred to as being "directly connected to" or "directly coupled to" another component, there is no intervening component present. Other terms used to describe relationships between components such as "between" versus "directly between" and "adjacent" versus "directly adjacent" can be interpreted in a like fashion.

Throughout the specification, like reference numerals can indicate like components. The terminology used herein is for the purpose of illustrating embodiments and is not intended to necessarily limit the present disclosure. In this specification, the singular form can include the plural sense, unless specified otherwise. The terms "comprises" and/or "comprising" used in this specification mean that the cited component, step, operation, and/or element does not exclude the presence or addition of one or more of other components, steps, operations, and/or elements.

Hereinafter, example embodiments of the present disclosure are described in detail with reference to the accompanying drawings.

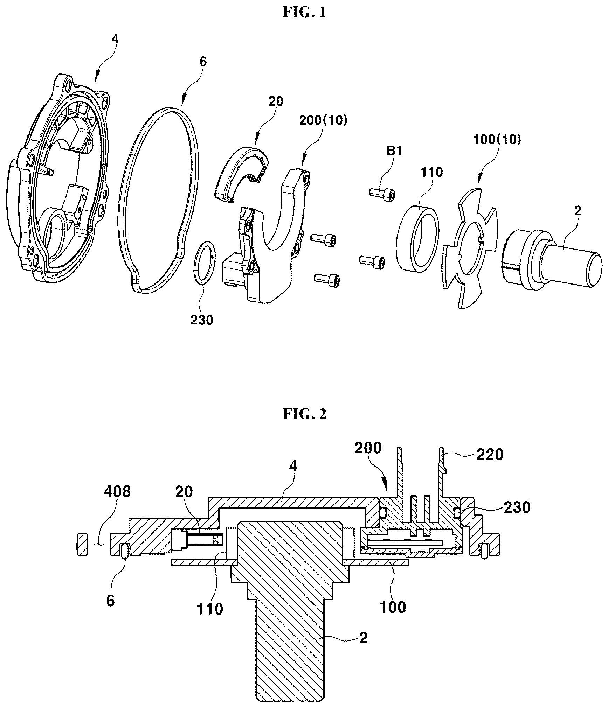

According to an embodiment of the present disclosure, a motor can include a stator (not shown) and a rotor (not shown). The rotor can be configured to rotate by electromagnetic interaction with the stator. In an example, the stator may include an electromagnet, and the rotor may include a permanent magnet. In another example, the stator and the rotor may each include an electromagnet. As illustrated in FIGS. 1 and 2, the motor can include a shaft 2. The shaft 2 may be connected to the rotor of the motor so as to rotate together with the rotor of the motor. Although omitted in the drawings, in an embodiment of the present disclosure, the rotor of the motor is arranged on an external side of the shaft 2, and the stator of the motor is arranged on an external side of the rotor of the motor.

According to an embodiment of the present disclosure, the motor may include a position sensor 10. In an example, the position sensor 10 may be an inductive sensor including a printed circuit board, a protective case, and a conductive target. In another example, the position sensor 10 may include a resolver including a core, a coil, and an insulating plastic. In still another example, the position sensor 10 may include a Hall sensor.

In an embodiment, the position sensor 10 is configured to detect the position of the motor. According to an embodiment of the present disclosure, the position sensor 10 includes a rotor portion 100 and a stator portion 200. Through the associated operation of the rotor portion 100 and the stator portion 200, the position sensor 10 may detect the position of the motor. For example, a voltage may be induced in a receiving pattern by the electromagnetic interaction between the transmitting and receiving patterns implemented on the printed circuit board inside the stator portion 200 of the position sensor and the rotor portion 100. The induced voltage may be subjected to noise filtering, signal delay compensation, error correction, etc., through the internal integrated circuit, and a sine/cosine differential voltage may be output. The output voltage may be converted into position information of the motor through an inverse tangent (atan) calculation.

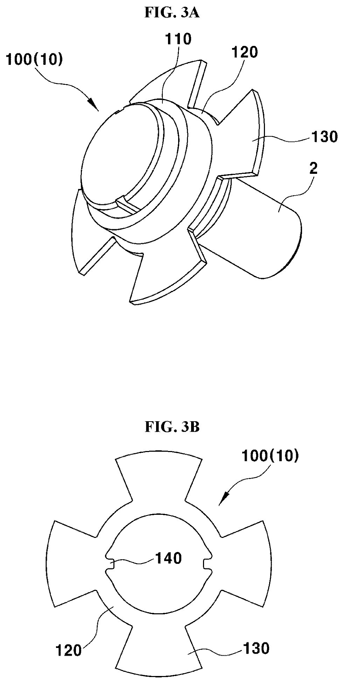

As illustrated in FIG. 3A, the rotor portion 100 may be assembled to the shaft 2. In an example, the rotor portion 100 may further include a retainer 110. The retainer 110 may prevent the rotor portion 100 from being detached or shaken when the shaft 2 rotates. The retainer 110 can be forcibly pressed onto the shaft 2, and the rotor portion 100 may be fixed to the shaft 2 by the retainer 110.

Referring to FIG. 3B, the rotor portion 100 may include an annular portion 120 and a plurality of blades 130. The shaft 2 may be inserted into the annular portion 120. A preset number (n, n is a natural number) of blades 130 may be arranged along the circumference of the annular portion 120. The number (n) of the blades 130 may be set to half of the number of poles (P) of the motor (i.e., n = P/2). In an embodiment, a rotor key 140 may be provided in the annular portion 120. The rotor key 140 may serve to match the initial positions of the motor and the position sensor 10.

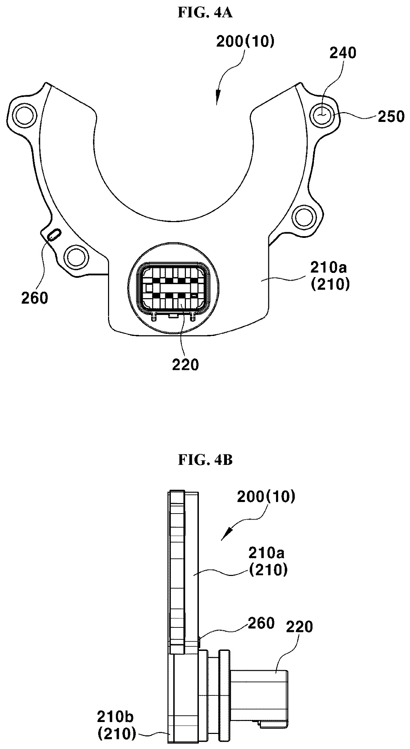

As illustrated in FIGS. 4A and 4B, the stator portion 200 may include a casing 210. According to an embodiment of the present disclosure, the casing 210 may include a first casing 210a and a second casing 210b. A space in the stator portion 200 may be defined by the first casing 210a and the second casing 210b. The printed circuit board, elements, and the like, may be arranged in the space in the stator portion 200. In an embodiment, the first casing 210a and the second casing 210b may be integrated with each other. For example, the second casing 210b may be laser fused to the first casing 210a. The printed circuit board and elements in the space may be protected from foreign substances, such as oil and dust, by the first casing 210a and the second casing 210b.

A connector 220 may be formed on the casing 210. The connector 220 may be integrated with the casing 210. For example, the connector 220 may be insert-molded into the casing 210. In an embodiment, the connector 220 may be insert-molded into the first casing 210a. By insert-molding the connector 220 into the casing 210, a wire required in the past may be eliminated, simplifying the assembly and structure of the motor. In some embodiments, a wire-type connector may be used as the connector 220.

In an embodiment, the stator portion 200 may have an approximately 'C' shape. The shape of the stator portion 200 may improve space utilization.

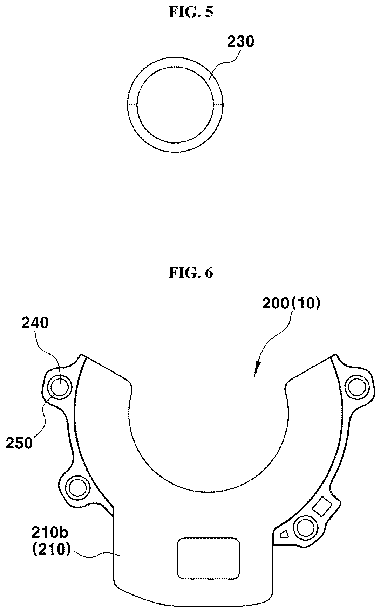

A position sensor seal 230 may be arranged around the connector 220. In an embodiment, as illustrated in FIG. 5, the position sensor seal 230 may have an approximately circular shape. The position sensor seal 230 may enable a watertight connection with another component (e.g., a cover 4 described below) to which the position sensor 10 is coupled.

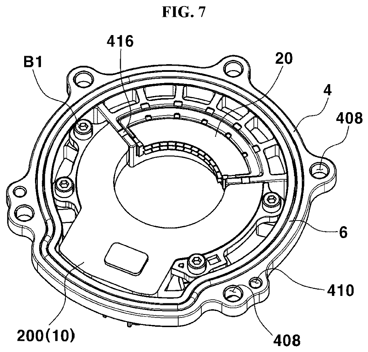

As illustrated in FIGs. 1 and 7, in an embodiment, the stator portion 200 may be coupled to the cover 4 through a fastening member, such as bolts B1. As illustrated in FIG. 6, one or more fastening holes 240 into which the bolt B1 are inserted may be formed in the casing 210. In an embodiment, a bushing 250 may be provided in the fastening hole 240. In an example, the bushing 250 may be insert-molded into the casing 210. The bushing 250 may protect the fastening hole 240 so as to prevent damage when coupling the stator portion 200 to the cover 4.

In an embodiment, an alignment member 260 may be formed on the casing 210. The alignment member 260 may include a selected or predetermined shape for reducing alignment and assembly tolerance of components.

Referring to FIG. 7, the stator portion 200 may be mounted on the cover 4 of the motor. In an example, the stator portion 200 may be coupled to the cover 4 through the bolts B1. In an embodiment, the cover 4 may be a rear cover of the motor. The cover 4 can be configured to protect the motor from foreign substances, such as dust and moisture, from outside. According to an embodiment of the present disclosure, an integrated structure in which the stator portion 200 and a shaft grounding ring (SGR) 20 are assembled to the cover 4 may be applied to reduce the overall size of the motor. The cover 4 may include various structures for efficiently arranging the position sensor 10 and the SGR 20.

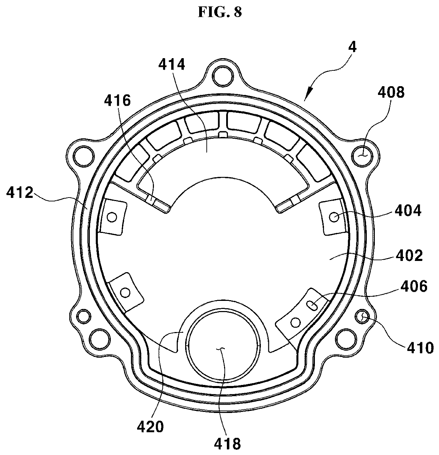

Referring to FIGS. 8 to 9, the cover 4 may include a stator seat 402 on which the stator portion 200 is seated. The stator portion 200 seated on the stator seat 402 may be coupled to the cover 4 through one or more coupling holes 404. The coupling holes 404 may be aligned with the fastening holes 240, and the bolts B1 may be inserted to pass through the fastening holes 240 and the coupling holes 404 that are aligned with each other. In some embodiments, a guide hole 406 may be formed in the cover 4. The guide hole 406 may guide the seating of the stator portion 200. In an embodiment, the guide hole 406 may be configured to engage with the alignment member 260 to guide the seating of the stator portion 200.

The cover 4 may be a portion of a housing (not shown) of the motor. In an example, the cover 4 may be detachably coupled to the housing of the motor. The cover 4 may include a plurality of through holes 408. The through holes 408 may be spaced apart from each other along the circumference of the cover 4. The cover 4 may be detachably coupled to the housing of the motor through fastening members, such as the bolts B1.

According to an embodiment, the cover 4 may further include one or more cover guide holes 410. The cover guide holes 410 may be provided at a selected or predetermined area of the circumference of the cover 4. In an example, the cover guide holes 410 may be arranged adjacent to the through holes 408. The cover guide holes 410 may be configured to reduce alignment and assembly tolerance of components. For example, the cover guide holes 410 may guide the coupling between the cover 4 and the housing of the motor.

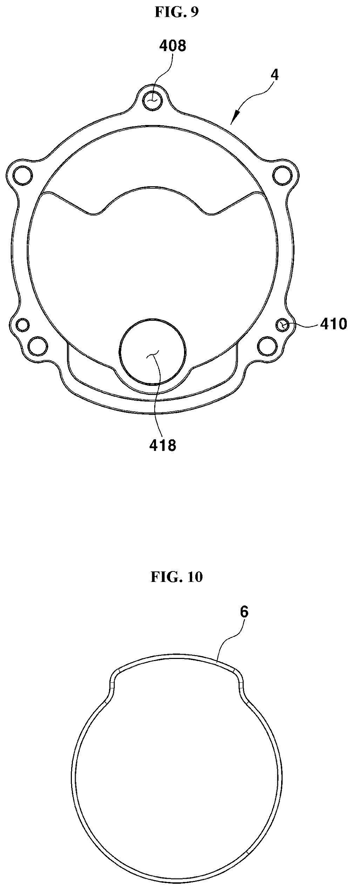

According to an embodiment, the cover 4 may be water-tightly coupled to the housing of the motor. As illustrated in FIG. 10, in an embodiment, a motor seal 6 may be arranged on the cover 4. Correspondingly, a motor seal groove 412 may be formed in the cover 4 so as to accommodate the motor seal 6. The motor seal 6 may maintain the water-tightness between the housing of the motor and the cover 4. In some embodiments, a sealant may be used instead of the motor seal 6.

The motor may further include the SGR 20. The SGR 20 can be configured to reduce the shaft voltage of the motor. The SGR 20 may be mounted on the cover 4. In an embodiment, an SGR area 414 in which the SGR 20 is positioned may be formed on the cover 4. In some embodiments, the SGR 20 may be forcibly pressed into a guide 416 provided in the SGR area 414. The SGR 20 can be configured to be grounded with the motor by contacting the SGR area 414. In another embodiment, the SGR 20 may be fixed by a fastening member, such as a bolt, to the SGR area 414. In another embodiment, the SGR 20 may be fixed by being inserted and pressed into the cover 4. In another embodiment, the SGR 20 may be fixed to the cover 4 through a bracket.

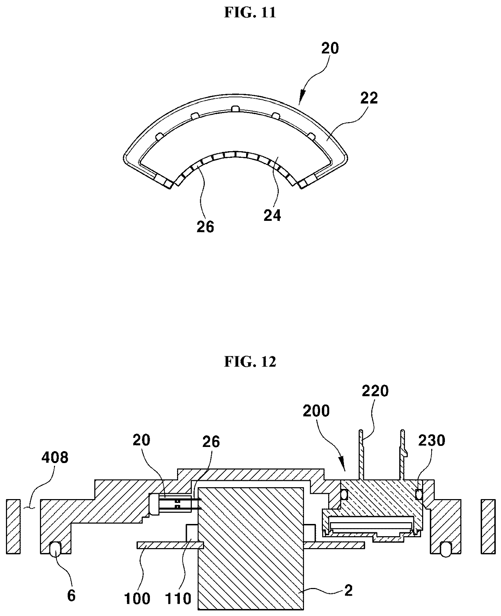

As illustrated in FIG. 11, the SGR 20 may include a housing 22 and a plate 24. The plate 24 may be forcibly pressed into the housing 22 being conductive. The SGR 20 can further include a brush 26. The brush 26 may be press-fitted between the housing 22 and the plate 24. In an embodiment, the brush 26 may contact with the retainer 110. In an embodiment, due to the contact between the brush 26 and the retainer 110, the shaft voltage of the motor is configured to be grounded sequentially through the brush 26, the plate 24, the housing 22, and the cover 4. In some embodiments, the brush 26 may be a stick-type brush instead of the carbon brush type as described above.

In an embodiment, the SGR 20 may have an approximately 'C' shape. The shape of the SGR 20 may reduce the weight compared to the conventional O-shaped SGR. Moreover, due to the shape of the SGR 20, the SGR 20 may be arranged on the same plane and/or the same axis as the stator portion 200, and because the SGR 20 and the stator portion 200 are mounted on the cover 4 of the motor, the axial size of the motor may be reduced compared to the conventional one, reducing the weight of the components and even the weight of the motor module.

The cover 4 may include a connector hole 418. The connector 220 of the stator portion 200 may be arranged to penetrate the connector hole 418. The position sensor seal 230 may be arranged between the cover 4 and the connector 220 to water-tightly seal between the cover 4 and the connector 220. A position sensor seal groove 420 for positioning the position sensor seal 230 may be formed on the cover 4.

In the embodiment of FIGs. 2 and 11, the brush 26 of the SGR 20 is brought into contact with the retainer 110, whereas, as illustrated in FIG. 12, according to a different embodiment, the brush 26 may be arranged to directly contact the shaft 2. For example, the retainer 110 may be arranged at a selected or predetermined distance from the SGR 20 in the extension direction of the shaft 2.

According to some embodiments of the present disclosure, a vehicle may include one of the motors described above.

As described above, a motor including a position sensor according to an embodiment of the present disclosure may reduce costs due to the reduction in size and weight of components and the elimination of components.

A motor including a position sensor according to an embodiment of the present disclosure may improve productivity and reduce costs. Specifically, in the past, the assembly process was performed in the following order: assembling a resolver to a rotor, assembling the resolver to a stator, fastening a resolver connector to a motor cover connector, assembling an SGR to a case, and fastening the motor cover connector to an inverter connector. On the other hand, according to an embodiment of the present disclosure, the assembly process may be simplified to the following order: assembling a position sensor to a rotor, assembling a multifunctional inductive position sensor, and fastening a motor cover connector to an inverter connector.

As is apparent from the above description, an embodiment of the present disclosure can provide the following advantages.

According to an embodiment of the present disclosure, a motor that includes a structure in which there is no interference between a position sensor and an SGR is provided.

An embodiment of the present disclosure enables miniaturization of the motor and reduction of the motor in weight and cost because there is no need for an increase in axial length of the motor, which was previously required due to the SGR and the position sensor.

According to an embodiment of the present disclosure, a motor that is capable of transmitting a signal from a position sensor while maintaining the watertight structure of the motor is provided.

Advantages of an embodiment of the present disclosure are not necessarily limited to what has been described above, and other advantages not mentioned herein can be clearly recognized by those skilled in the art based on the above description.

It can be apparent to those of ordinary skill in the art to which the present disclosure pertains that the present disclosure is not limited by the above-described example embodiments and the accompanying drawings, and various substitutions, modifications, and changes can be possible within a range that does not depart from the technical ideas and scopes of the present disclosure.

## Claims

1. A motor, comprising:
a shaft grounding ring (SGR);
a position sensor comprising a stator portion and a rotor portion; and
a cover, wherein the stator portion and the SGR are mounted on the cover.

2. The motor of claim 1, further comprising a shaft, wherein the rotor portion is mounted on the shaft, and wherein the rotor portion is configured to electromagnetically interact with the stator portion.

3. The motor of claim 2, further comprising a retainer configured to secure the rotor portion on the shaft,
wherein the SGR is configured to contact the shaft or is configured to be electrically connected to the shaft via the retainer.

4. The motor of anyone of claims 1-3, wherein the SGR comprises a brush directly electrically connected to the shaft or indirectly electrically connected to the shaft via the retainer.

5. The motor of claim 4, wherein the SGR further comprises:
a housing; and
a plate coupled to the housing, wherein the brush is fixed between the housing and the plate.

6. The motor of anyone of claims 1-5, wherein the stator portion has a first "C" shape, and wherein the SGR has a second "C" shape.

7. The motor of anyone of claims 1-6, wherein the cover comprises:
an SGR area, wherein the SGR is disposed in the SGR area; and
a stator seat on which the stator portion is arranged.

8. The motor of claim 7, wherein the cover further comprises a guide at the SGR area, and
wherein the SGR is pressed into the SGR area via the guide.

9. The motor of claim 7 or 8, wherein the stator seat includes a guide hole, and wherein the stator portion comprises an alignment member configured to engage with the guide hole in the stator seat.

10. The motor of anyone of claims 1-9, wherein the stator portion comprises a connector integrated with the stator portion.

11. The motor of claim 10, wherein the cover comprises a connector hole through which the connector passes, and
wherein the motor further comprises a seal arranged around the connector hole.

12. The motor of anyone of claims 1-11, further comprising a seal configured to be disposed between the cover and a motor housing.

13. The motor of anyone of claims 1-12, wherein the SGR and the stator portion of the position sensor are on a same plane that intersects a rotational axis of the motor.

14. A method of assembling a motor, the method comprising:
attaching a rotor portion of a position sensor to a shaft of the motor;
attaching a stator portion of the position sensor to a cover;
attaching a shaft grounding ring (SGR) to the cover, wherein the SGR is "C" shaped; and
attaching the cover to the motor, such that the rotor portion is adjacent the stator portion, and such that the SGR and the stator portion of the position sensor are on a same plane that intersects a rotational axis of the shaft.

15. The method of claim 14, further comprising:
inserting a seal into a groove in the cover, wherein the groove is adjacent a connector hole in the cover; and
inserting a connector extending from the stator portion of the position sensor through the connector hole;
wherein the attaching of the stator portion of the position sensor to the cover comprises sealing the connector hole using the seal pressed against the stator portion of the position sensor, and
wherein the attaching of the rotor portion to the shaft comprises inserting the shaft through the rotor portion, and attaching a retainer to the shaft such that the retainer secures the rotor portion to the shaft.
